# EUROPEAN PATENT SPECIFICATION

(11) **EP 1 367 772 B1**
(45) Date of publication and mention of the grant of the patent: **22.02.2006**
(21) Application number: 02291329.7
(22) Date of filing: 30.05.2002
(51) Int. Cl.: H04L 12/28

(54) **Attachment of user equipment to a selected access interface of router equipment of an internet service provider**
Anschluss von Benutzergeräten Selektivezugangschnittstelle von einem ISP-router
Branchement d'équipement d' utilisateur à une interface-routeur d' accès selectionnée d'un fournisseur d'accès Internet

(43) Date of publication of application: 03.12.2003
(73) Proprietor: MOTOROLA, INC., Schaumburg, IL 60196 (US)
(72) Inventor: Olivereau, Alexis, 91120 Palaiseau (FR); Janneteau, Christophe, 78390 Bois d'Arcy (FR); Mokhtar, Ahmed, 35700 Rennes (FR); Lach, Hong-Yon, 94220 Charenton le Pont (FR)
(74) Representative: Cross, Rupert Edward Blount

(56) References cited:
- EP-A- 1 158 723
- US-A- 5 790 548
- FLYKT, PERKINS, EKLUND: "AAA for IPv6 Network Access" INTERNET DRAFT, [Online] 1 March 2002 (2002-03-01), XP002223855 Retrieved from the Internet: <URL:http://community.roxen.com/developers /idocs/drafts/draft-perkins-aaav6-05.txt> [retrieved on 2002-12-02]

## Description

### Field of the invention

This invention relates to attachment of user equipment to a selected access interface of router equipment of an Internet service provider, and especially, but not exclusively where the user equipment is capable of selecting attachment between two or more routers interfaces of two or more Internet service providers.

### Background of the invention

Internet and wireless communication services require Authentication of the user, Authorisation for the specific services or quality of service that the user requests and Accounting (including charging) for his usage ('AAA' functions).

The first generation of cellular telephone systems relied on analogue frequency modulation for speech transmission, and several standards have been developed, such as NMT450, NMT900, AMPS, and ETACS. The second generation of cellular systems is based on three different standards: in Europe and some countries in Asia and Australia--Global System For Mobile Communications (GSM), in north America--American Digital Cellular (ADC) and in Japan-Pacific Digital Cellular (PDC). These second generation systems all employ digital transmission for voice and data, including some digital services such as facsimile transmission and short messages. Most user equipment for 1^{st} and 2^{nd} generation systems are simple telephone terminals operating with a single telephone system and with limited data processing capability, such as personal data assistants ('PDA's - diary, reminder, notebook) and simple games.

Communication systems are now being prepared according to a third generation of standards. Among 3^{rd} generation cellular standards are the UMTS 3GPP (3^{rd} generation Partnership Project) and 3GPP2 standards, of the European Telecommunications Institute ('ETSI') and the International Mobile Telecommunications-2000 ('IMT-2000') standards. The 3^{rd} generation systems enable enhanced access to the Internet from a mobile user equipment using wireless links.

The mobility inherent in the wireless connection of a user equipment implies that the point of attachment to the Internet will change relatively often, compared to a stationary user equipment. Moreover, a choice between different Internet Service Providers ('ISP's) is feasible with a wireless communication link.

In fact, in future telecommunication networks, it is expected that Internet Protocol will be a central component not only in the core network but also up to the base stations. These base stations are expected to be collocated or to have very close relationships with Internet Protocol ('IP') routers.

The global model that is foreseen includes a large number of ISPs providing different access technologies; many of these ISP customers will be mobile users, who should be able to access services with differing Quality of Service ('QoS') not only from their own ISP but also from other ISPs. Access to different ISPs will be controlled and granted by Authentication, Authorization and Accounting (AAA) architecture, which will also be in charge of auditing and charging.

Known systems do not include any mechanism to give the mobile user information about parameters of services provided by an Internet service provider before it attaches. As used herein, the expression 'parameters of services provided by an Internet service provider' is to be understood as comprising data or information concerning communication parameters (additional to router address data), such as AAA or QoS for example, as well as information concerning the content of possible communications. For example, QoS negotiation (including presentation of local services and availability) is expected to occur after AAA authentication. Consequently, a user may very well perform the AAA authentication phase and then realize either that the service he wants to access is not available, or that it will be expensive.

In the GSM telecommunication system, the identity of the operator is broadcast over the air so that a mobile node can discover the list of networks with which it has coverage. However, in this case the broadcast information is very limited (operator identification ('ID') only) and this support is technology dependent (GSM). A far more generic approach is desirable, which can support broadcast of different AAA and QOS parameters. Moreover it is desirable for it to be implemented at the IP level, in order to be independent of the access technology, in order for it to be inherently suitable for future heterogeneous architectures.

Dynamic Host Configuration Protocol (DHCP) can be used to provide information about the network to a mobile node. However, DHCP has limitations which make it unsuitable for the above purposes:
- DHCP provides centralized information; it is not intended to provide per-router information.
- DHCP provides static data; there is no described mechanism to make it cooperate dynamically with QoS / charging dedicated entities.
- DHCP is based on replies in response to requests; DHCP messaging may occur as a part of the attach phase, but it has to occur after the best network has been chosen.

A router advertisement protocol for the current IPv4 Internet protocol standards is described in the document RFC 1256 "ICMP Router Discovery Messages" published by the Network Router Discovery Working Group of the Internet Engineering Task Force ('IETF') September 1991.

Before a host can send IP datagrams beyond its directly attached subnet, it must discover the address of at least one operational router on that subnet. Typically, this is accomplished by reading a list of one or more router addresses from a (possibly remote) configuration file at start-up time. On multicast links, some hosts also discover router addresses by listening to routing protocol traffic. Both of these methods have serious drawbacks: configuration files must be maintained manually -- a significant administrative burden - and are unable to track dynamic changes in router availability; eavesdropping on routing traffic requires that hosts recognize the particular routing protocols in use, which vary from subnet to subnet and which are subject to change at any time. The expression 'multicast' is used herein to include IP broadcast emissions, where no destination IP address is included, as well as IP multicast where an 'all nodes' type of IP address that is not specific to any of the destination nodes is included.

The document RFC 1256 specifies an alternative router discovery method using a pair of Internet Message Control Protocol ('ICMP') messages, for use on multicast links. It eliminates the need for manual configuration of router addresses and is independent of any specific routing protocol. The ICMP router discovery messages are called "Router Advertisements" and "Router Solicitations". Each router periodically multicasts a Router Advertisement from each of its multicast interfaces, announcing the IP address(es) of that interface. Hosts discover the addresses of their neighbouring routers simply by listening for advertisements. When a host attached to a multicast link starts up, it may multicast a Router Solicitation to ask for immediate advertisements, rather than waiting for the next periodic ones to arrive; if (and only if) no advertisements are forthcoming, the host may retransmit the solicitation a small number of times, but then must desist from sending any more solicitations. Any routers that subsequently start up, or that were not discovered because of packet loss or temporary link partitioning, are eventually discovered by reception of their periodic (unsolicited) advertisements.

The document RFC 2461 "Neighbor Discovery for IP Version 6" published by the Network Router Discovery Working Group of the IETF also discloses a router advertisement protocol, which is suitable for the draft IPv6 Internet protocol standards. As described in the document RFC 2461, Router Advertisements contain a list of prefixes used for on-link determination and/or autonomous address configuration; flags associated with the prefixes specify the intended uses of a particular prefix. Hosts use the advertised on-link prefixes to build and maintain a list that is used in deciding when a packet's destination is on-link or beyond a router. Router Advertisement messages also contain Internet parameters such as the hop limit that hosts should use in outgoing packets and, optionally, link parameters such as the link Maximum Transmission Unit ('MTU'). This facilitates centralized administration of critical parameters that can be set on routers and automatically propagated to all attached hosts.

However the protocols of RFC 1256 and RFC 2461 still do not include any mechanism to give mobile user equipment information about AAA or QoS parameters before it attaches.

### Summary of the invention

The present invention provides a method of attaching user equipment to a selected interface of router equipment of an Internet service provider as described in the accompanying claims and also includes apparatus for use in attaching user equipment to a selected interface by such a method and user equipment for attaching to a selected interface by such a method.

### Brief description of the drawings

Figure 1 is a flow chart, the left-hand side of which shows a method of exchanging messages in accordance with a prior art system and the right-hand side of which shows a method of exchanging messages in accordance with one embodiment of the invention, given by way of example,
Figure 2 is a schematic diagram showing the situation of a mobile node in relation to the Internet and its attachment using messages exchanged by the method of the embodiment of the present invention shown in Figure 1, and
Figure 3 is a diagram showing the format of a Router Advertisement used in the method of the embodiment of the present invention shown in Figure 1

### Detailed description of the preferred embodiments

The embodiment of the present invention shown in the accompanying drawings provides a means for user equipment to discover AAA, QoS, Access System and location parameters before it attaches to the interface of a router by advertising this information in enhanced Router Advertisement ('RA') messages. The basic RA message is already essential to a Mobile Node when roaming and, for example, triggers all Mobile-lPv6 messaging since it allows a Mobile Node to understand that it has moved to another point of attachment (when the advertised prefix is a new one). The RA message is readily enhanced so that it can enable the Mobile Node (either Mobile Host or Mobile Router) to obtain most of the information the user equipment needs before performing IP attachment. This information may be exploited manually, by being displayed to the user for him to choose whether or not to select a given ISP, or automatically, by the user equipment selecting the ISP automatically based on the advertised information according to selection criteria and algorithms.

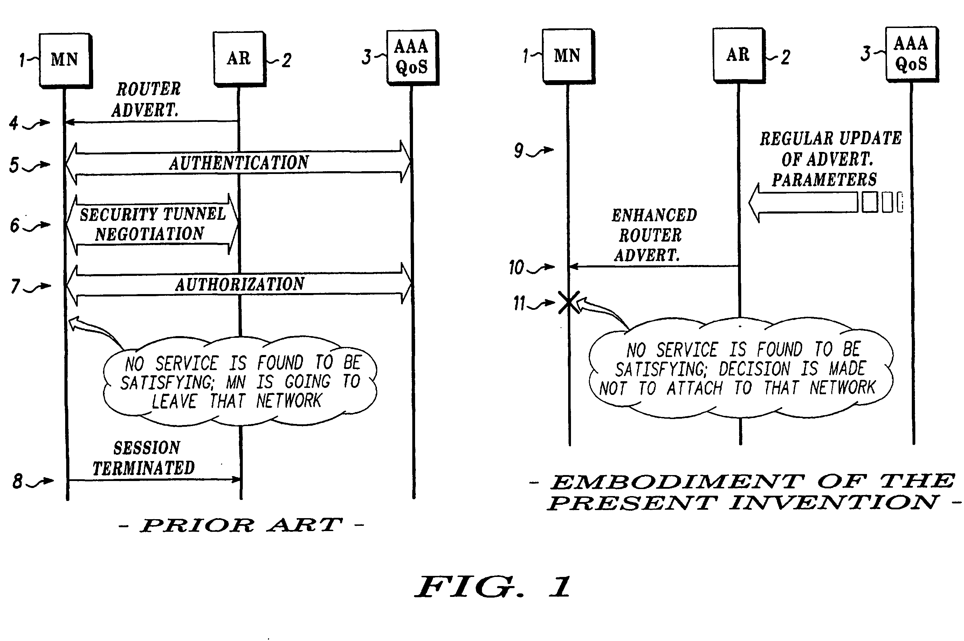

The left-hand side of Figure 1 of the drawings shows a prior art exchange of messages during attachment using a protocol in accordance with the present draft of lPv6, for the case of a mobile node 1 attaching to an access router 2 of an Internet service provider, the home AAA & QoS servers of the mobile node 1 being shown at 3.

The first stage 4 in the exchange of messages is the access router 2 transmitting a Router Advertisement by periodically (or in response to a Router Solicitation multicast by the mobile node 1, which does not require the mobile node to attach to an interface) multicasting a Router Advertisement from each of its multicast interfaces, announcing the IP address or addresses of that interface. This Router Advertisement does not contain any information relating to parameters of services provided by the router 2 nor by the Internet service provider. The Router Advertisements are multicast periodically but may also be multicast in response to a Router Solicitation message multicast by the mobile node 1, which does not require the mobile node to attach to an interface.

Once the mobile node 1 has received the IP address of the access router 2, it can start the exchange of authentication messages with the AAA server 3 at stage 5. After Authentication, a security tunnel can be negotiated at 6, to enable the Authorisation exchange of messages with the AAA server 3 at stage 7. The Authorisation message from the AAA server 3 may then communicate to the mobile node 1 information relating to parameters of authorised services provided by the Internet service provider and, in particular cost and QoS information, for example. It is only now, at stage 7, that the mobile node 1 possesses information enabling an informed decision whether or not to select the access router 2 of that Internet service provider. In the case of a negative decision, the mobile node sends a session termination message at stage 8. If the decision is negative, the time taken, which may be many seconds, and the overhead of signalling messages have been wasted.

The corresponding protocol in accordance with this embodiment of the present invention is shown at the right-hand side of Figure 1. At an initial stage 9, the AAA server 3 regularly sends to the access router 2 updates of information advertising the services available. The service information is included in enhanced Router Advertisement messages that the access router 2 multicasts periodically (or in response to a Router Solicitation) from all its multicast interfaces at stage 10 before the mobile node 1 attaches to the access router 2. The mobile node receives the service information and can immediately make an informed decision whether or not to select the access router 2 of that Internet service provider. In the case of a negative decision, there is not even any need to send any session termination message, as no session has been started and the protocol ends at stage 11 with the absence of a response from the mobile node 1 to the enhanced Router Advertisement messages.

In one embodiment of the present invention, the enhanced router advertisement is multicast repeatedly, at regular intervals, or in response to multicast solicitation messages from the user equipment; the information emitted is not specific to any particular user equipment. In another embodiment of the present invention, the user equipment may multicast an enhanced router solicitation message requesting specific or more detailed service information and the access router responds by including the requested specific service information in the multicast enhanced router advertisement; the normal enhanced multicasts of the access router in the absence of an enhanced router solicitation message only consist of simplified, non-specific service information.

Five examples of information that are transmitted by the method of the embodiment of the present invention shown in Figure 1 are:
a) ISP partnership: some ISPs (or operators) have some privileged relationships (commercial agreements) with some others. Basically, if ISP A and ISP B have a commercial agreement, it will be more worthwhile (less expensive) for an A customer to attach to ISP B than to attach to any third party ISP C if both B and C are available. Including the ISP identity (domain name, for example) within the RA allows the User Equipment to choose the best network to use when RAs from different ISPs are received. The ISP identity is therefore one of the AAA parameters that is multicast in the enhanced Router Advertisements of this embodiment of the invention.
b) Available AAA & QoS information: There are clearly cases where ISP identity is not enough to choose which IP router to attach to. Basically a mobile user needs two main pieces of information before choosing to attach to a foreign network:
   - knowledge about how much he will be charged for the requested service (AAA information).
   - knowledge about the available QoS (e.g. available bandwidth) on the access router (QoS information).

   With currently proposed systems, the mobile node does not have this information before performing attachment. In a case where several router advertisements are received at the same time, no means is given to a mobile node to choose the best network to attach to. The embodiment of the present invention shown in the accompanying drawings allows mobile terminal manufacturers to implement a network selection algorithm (even a very basic one) readily on mobile nodes based on information carried within the enhanced RAs.
c) Security Associations re-keying: This point is a technical point that is planned to happen transparently to the user; it is however an important one. AAA architecture specifies that traffic between a mobile node and an access router should be protected by Internet protocol security ('IPsec'), the security protocol specified by the IETF standard that provides layer 3 authentication and encryption over the Internet. When a mobile node roams from one access router to another one, there are two possibilities:
   - either the new access router belongs to the same administrative domain as the previous one. Then security parameters, and more generally user related context can be transferred from the old access router to the new one and no special processing is needed at the mobile node side.
   - or the new access router belongs to another administrative domain. In this case the mobile node is required to reauthenticate and establishing a new security context with the new access router. Providing the administrative domain name (and possibly other AAA information) within the RA would give information to the mobile node about what it is supposed to do to communicate on the new subnet.
d) Access system specific information: in a case where different Access Systems broadcast Router Advertisements on the same channel, previously known systems give the mobile node no means to discriminate these RAs based on Access system parameters and recover useful link-layer parameters, whereas this is possible with this embodiment of the present invention.
e) Location information: there is a need for a mobile user to get information concerning its location. However, previously known systems have no layer-3 mechanism to address this issue. The embodiment of the present invention shown in the accompanying drawings enables a user to be aware of its location, even basic information, through advertisements of location information in enhanced router advertisements from environing routers.

The document "AAA for IPv6 Network Access", draft-perkins-aaav6-05.txt, IETF work in progress, March 2002 refers to a local challenge option in Router Advertisement, which is used for anti-replay protection of the Attendant. Although it is used in AAA messaging (for MN-Attendant security algorithm), it is not information relating to a service parameter and it does not carry any information that is directly useful to the user in selecting the router or not and such selection is not suggested.

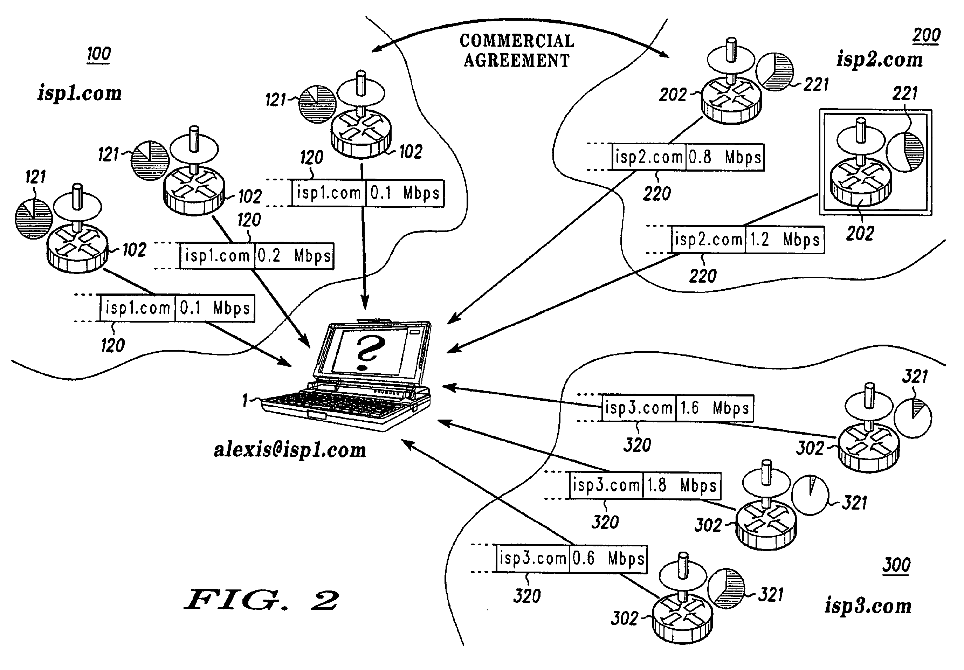

Figure 2 illustrates a situation in which advantages of the embodiment of the present invention shown in Figure 1 will be apparent. The user equipment 1 is within communication range of its home Internet service provider 100, through router interfaces 102 that offer various communication bandwidths shown at 120 and that are loaded to various degrees, as shown by the pie charts at 121. The user equipment 1 is also within communication range of another Internet service provider 200 with which its home Internet service provider 100 has a commercial agreement, the Internet service provider 200 having router interfaces 202 that offer various communication bandwidths shown at 220 and that are loaded to various degrees, as shown by the pie charts at 221. The user equipment 1 is also within communication range of a third Internet service provider 300 with which its home Internet service provider 100 does not have a commercial agreement, the Internet service provider 300 having router interfaces 302 that offer various communication bandwidths shown at 320 and that are loaded to various degrees, as shown by the pie charts at 321.

If the home Internet service provider 100 is overloaded, as shown in Figure 2, the available bandwidth at its router interfaces 102 become restricted. The user equipment receives enhanced Router advertisements from the router interfaces 202 and 302 in accordance with the method in accordance with this embodiment of the present invention and can ascertain that the bandwidths available from the router interfaces 202 and 302 are wider than from the Internet service provider 100. It can also ascertain that the cost of an appropriate bandwidth for the service it needs is less from the Internet service provider 200 than from the Internet service provider 300 (because of the commercial agreement between the Internet service providers 100 and 200). The user is therefore now in a position to make an informed decision which router interface to select, if any, as a function of the bandwidth desired and the cost, without having to attach to any of the access routers 102, 202 or 302.

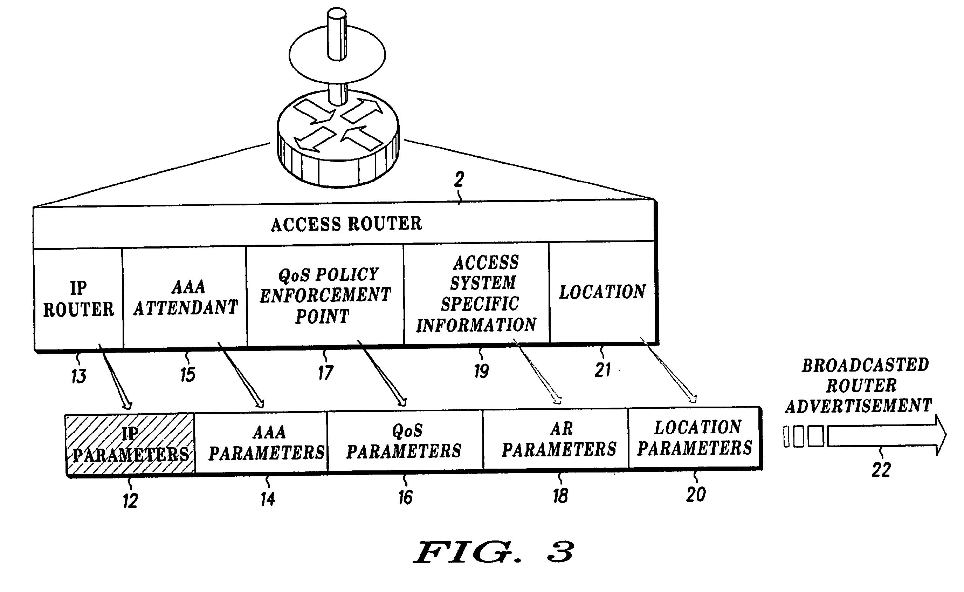

Figure 3 illustrates by way of example the way in which the enhanced router advertisement of Figure 1 is generated in one embodiment of the present invention. The access router 2 obtains Internet Protocol address information 12 from an IP router 13 and adds to the basic router advertisement AAA parameters 14 that it obtains from an AAA client (Attendant) 15 and QoS information 16 that it obtains from a QoS Policy Enforcement Point 17, in addition to its own access router parameters 18 that are specific to the access system as shown at 19, together with location parameters 20 obtained from location specifying means 21, to form the complete enhanced router message information 22. In a preferred embodiment of the present invention, these three entities (IP router 13, Attendant 15 and QoS PEP 17) are collocated with the access router 2. However in an alternative embodiment of the present invention, these three entities are situated remotely from the access router 2.

The Access Router includes means to recover QoS, AAA, and Access Router parameters before it sends an enhanced router advertisement. The collect of these parameters does not need to occur before each broadcasting of a Router Advertisement: in the preferred embodiment of the present invention the parameters are modified with a frequency much smaller than RA frequency and information concerning only the change is sent to the access router to update information stored therein.

Note that AAA, QoS, Access System and location parameters can be first recovered and then advertised even in the case of a Mobile Router. In a preferred embodiment of the present invention, the Mobile Router derives the parameters it advertises from the parameters it receives in router advertisements sent by its anchor router.

## Claims

1. A method of attaching user equipment (1) to a selected interface (202) of access router equipment (2) of an Internet service provider (200),
**characterised in that** said access router equipment (2) transmits (10) service information relating to parameters of services provided by said Internet service provider (200) together with Internet Protocol address information of an available interface (202) of said access router equipment (2) before said user equipment attaches to the interface (202) of said router equipment (2).

2. A method as claimed in claim 1, wherein said access router equipment (2) transmits (10) said service information together with said Internet Protocol address information periodically and on demand.

3. A method as claimed in claim 1 or 2, wherein said access router equipment (2) transmits further service information together with the first said service information and said Internet Protocol address information of said available interface (202) in response to a router solicitation message emitted by said user equipment.

4. A method as claimed in any preceding claim, wherein said access router equipment (2) multicasts said service information relating to parameters of services provided by said Internet service provider together with said Internet Protocol address information of said interface.

5. A method as claimed in any preceding claim, wherein a plurality of access router equipments (102, 202, 302) transmit to the user equipment (1) said service information relating to respective Internet service providers (100, 200, 300) together with said Internet Protocol address information of respective interfaces, so as to enable the user equipment to select one of said interfaces before attaching to it.

6. A method as claimed in claim 4, wherein said service information comprises link-layer parameters (19) of a plurality of access systems to said Internet service provider.

7. A method as claimed in any preceding claim, wherein said service information comprises AAA parameters of services available from said Internet service provider.

8. A method as claimed in claim 7, wherein said AAA parameters include an indication of the identity of said Internet service provider.

9. A method as claimed in claim 8, wherein said indication of identity comprises an administrative domain name of said Internet service provider.

10. A method as claimed in any of claims 7 to 9, wherein said AAA parameters included in said service information comprise information relating to the cost of services available from said Internet service provider.

11. A method as claimed in any preceding claim, wherein said service information comprises QoS parameters of services available from said Internet service provider.

12. A method as claimed in claim 11, wherein said QoS parameters included in said service information comprise information relating to the bandwidth of services available from said Internet service provider.

13. A method as claimed in any preceding claim, wherein said service information comprises information relating to the current location of said user equipment (1).

14. Apparatus for use in attaching user equipment (1) to a selected interface of access router equipment (2) of an Internet service provider by a method as claimed in any preceding claim, comprising means for said access router equipment to transmit said service information together with Internet Protocol address information of an available interface (202) of said access router equipment (2) before said user equipment attaches to the interface (202) of said router equipment (2).

15. User equipment for attaching to a selected interface of access router equipment (2) of an Internet service provider by a method as claimed in any preceding claim, wherein said user equipment (1) is responsive to information relating to said service parameters of said Internet service provider transmitted by said access router equipment together with Internet Protocol address information of an available interface (202) of said access router equipment (2) before said user equipment attaches to the interface (202) of said router equipment (2).

## Patentansprüche

1. Verfahren zum Anschließen einer Anwenderausrüstung (1) an eine ausgewählte Schnittstelle (202) einer Zugriffs-Router-Ausrüstung (2) eines Internetdienstanbieters (200), **dadurch gekennzeichnet, dass** die Zugriffs-Router-Ausrüstung (2) eine Dienstinformation bezüglich Parametern von Diensten überträgt (10), die durch den Internetdienstanbieter (200) zusammen mit einer Internetprotokolladresseninformation einer verfügbaren Schnittstelle (202) der Zugriffs-Router-Ausrüstung (2) zur Verfügung gestellt werden, bevor sich die Anwenderausrüstung an die Schnittstelle (202) der Router-Ausrüstung (2) anschließt.

2. Verfahren gemäß Anspruch 1, wobei die Zugriffs-Router-Ausrüstung (2) die Dienstinformation zusammen mit der Internetprotokolladresseninformation periodisch und auf Verlangen überträgt (10).

3. Verfahren gemäß Anspruch 1 oder 2, wobei die Zugriffs-Router-Ausrüstung (2) weitere Dienstinformation zusammen mit der ersten Dienstinformation und der Internetprotokolladresseninformation der verfügbaren Schnittstelle (202) in Reaktion auf eine durch die Anwenderausrüstung ausgegebene Router-Anforderungsnachricht überträgt.

4. Verfahren gemäß einem der vorangehenden Ansprüche, wobei die Zugriffs-Router-Ausrüstung (2) die Dienstinformation bezüglich Parametern von Diensten multicastet, die durch den Internetdienstanbieter zusammen mit der Internetprotokolladresseninformation der Schnittstelle zur Verfügung gestellt werden.

5. Verfahren gemäß einem der vorangehenden Ansprüche, wobei eine Mehrzahl von Zugriffs-Router-Ausrüstungen (102, 202, 302) die Dienstinformation bezüglich entsprechender Internetdienstanbieter (100, 200, 300) zusammen mit der Internetprotokolladresseninformation der entsprechenden Schnittstellen an die Anwenderausrüstung (1) überträgt, um so die Anwenderausrüstung zu befähigen, eine der Schnittstellen auszuwählen, bevor sie sich an sie anschließt.

6. Verfahren gemäß Anspruch 4, wobei die Dienstinformation Verbindungsschichtparameter (19) einer Mehrzahl von Zugriffssystemen zu dem Internetdienstanbieter umfasst.

7. Verfahren gemäß einem der vorangehenden Ansprüche, wobei die Dienstinformation AAA-Parameter von Diensten umfasst, die von dem Internetdienstanbieter zur Verfügung stehen.

8. Verfahren gemäß Anspruch 7, wobei die AAA-Parameter eine Angabe der Identifizierung des Internetdienstanbieters umfassen.

9. Verfahren gemäß Anspruch 8, wobei die Angabe einer Identifizierung einen Verwaltungsdomänennamen des Internetdienstanbieters umfasst.

10. Verfahren gemäß einem der Ansprüche 7 bis 9, wobei die in der Dienstinformation enthaltenen AAA-Parameter Information bezüglich der Kosten von Diensten umfassen, die von dem Internetdienstanbieter erhältlich sind.

11. Verfahren gemäß einem der vorangehenden Ansprüche, wobei die Dienstinformation QoS-Parameter von Diensten umfasst, die von dem Internetdienstanbieter erhältlich sind.

12. Verfahren gemäß Anspruch 11, wobei die QoS-Parameter, die in der Dienstinformation enthalten sind, Information bezüglich der Bandbreite von Diensten umfasst, die von dem Internetdienstanbieter erhältlich sind.

13. Verfahren gemäß einem der vorangehenden Ansprüche, wobei die Dienstinformation Information bezüglich des aktuellen Standortes der Anwenderausrüstung (1) umfasst.

14. Vorrichtung zur Verwendung bei einem Anschließen einer Anwenderausrüstung (1) an eine ausgewählte Schnittstelle einer Zugriffs-Router-Ausrüstung (2) eines Internetdienstanbieters durch ein Verfahren gemäß einem der vorangehenden Ansprüche, wobei die Vorrichtung umfasst: Mittel für die Zugriffs-Router-Ausrüstung zum Übertragen der Dienstinformation zusammen mit Internetprotokolladresseninformation einer verfügbaren Schnittstelle (202) an die Zugriffs-Router-Ausrüstung (2), bevor sich die Anwenderausrüstung an die Schnittstelle (202) der Router-Ausrüstung (2) anschließt.

15. Anwenderausrüstung zum Anschließen an eine ausgewählte Schnittstelle einer Zugriffs-Router-Ausrüstung (2) eines Internetdienstanbieters durch ein Verfahren gemäß einem der vorangehenden Ansprüche, wobei die Anwenderausrüstung (1) auf Information bezüglich der Dienstparameter des Internetdienstanbieters anspricht, die durch die Zugriffs-Router-Ausrüstung zusammen mit Internetprotokolladresseninformation einer verfügbaren Schnittstelle (202) der Zugriffs-Router-Ausrüstung (2) übertragen wird, bevor sich die Anwenderausrüstung an die Schnittstelle (202) der Router-Ausrüstung (2) anschließt.

## Revendications

1. Procédé de connexion d'un équipement d'utilisateur (1) sur une interface sélectionnée (202) d'équipement routeur d'accès (2) d'un fournisseur de services Internet (200),
**caractérisé en ce que** ledit équipement routeur d'accès (2) transmet (10) des informations de services relatifs à des paramètres de services fournis par ledit fournisseur de services Internet (200) en même temps que des informations d'adressage IP, ou Protocole Internet, d'une interface disponible (202) dudit équipement routeur d'accès (2) avant que ledit équipement d'utilisateur ne soit connecté à l'interface (200) dudit équipement routeur (2).

2. Procédé selon la revendication 1, où ledit équipement routeur d'accès (2) transmet (10) lesdites informations de services en même temps que lesdites informations d'adressage IP périodiquement et sur demande.

3. Procédé selon la revendication 1 ou 2, où ledit équipement routeur d'accès (2) transmet des Informations de services supplémentaires en même temps que les premières dites informations de services et lesdites informations d'adressage IP de ladite interface disponible (202) en réponse à un message de sollicitation de routeur émis par ledit équipement d'utilisateur.

4. Procédé selon l'une quelconque des revendications précédentes, où ledit équipement routeur d'accès (2) diffuse à plusieurs destinataires lesdites informations de services relatives à des paramètres de services fournis par ledit fournisseur de service Internet en même temps que lesdites informations d'adressage IP de ladite Interface.

5. Procédé selon l'une quelconque des revendications précédentes, où une pluralité d'équipements routeurs d'accès (102, 202, 302) transmet à l'équipement d'utilisateur (1) lesdites informations de services relatives à des fournisseurs de services Internet respectifs (100, 200, 300) en même temps que lesdites informations d'adressage IP d'interfaces respectives, de manière à permettre à l'équipement d'utilisateur de sélectionner l'une desdites interfaces avant de s'y connecter.

6. Procédé selon la revendication 4, où lesdites informations de services comprennent des paramètres de la couché de liaisons (19) d'une pluralité de systèmes d'accès audit fournisseur de services Internet.

7. Procédé selon l'une quelconque des revendications précédentes, où lesdites informations de services comprennent des paramètres AAA de services disponibles auprès dudit fournisseur de services Internet.

8. Procédé selon la revendication 7, où lesdits paramètres AAA comportent l'indication de l'Identité dudit fournisseur de services Internet

9. Procédé selon la revendication 8, où ladite indication d'identité comprend un nom de domaine administratif dudit fournisseur de services Internet.

10. Procédé selon l'une quelconque des revendications 7 à 9, où lesdits paramètres AAA Inclus dans lesdites informations de services comprennent des informations relatives au coût des services disponibles auprès du fournisseur de services Internet.

11. Procédé selon l'une quelconque des revendications précédentes, où lesdites informations de services comprennent des paramètres QoS de services disponibles auprès dudit fournisseur de services Internet.

12. Procédé selon la revendication 11, où lesdits paramètres QoS contenus dans lesdites informations de services comprennent des informations relatives à la largeur de bande des services disponibles auprès dudit fournisseur de services Internet.

13. Procédé selon l'une quelconque des revendications précédentes, où lesdites informations de services comprennent des Informations relatives à la position courante dudit équipement d'utilisateur (1).

14. Appareil destiné à être utilisé dans la connexion d'un équipement d'utilisateur (1) à une interface sélectionnée d'un équipement routeur d'accès (2) d'un fournisseur de services Internet au moyen d'un procédé tel que défini dans l'une quelconque des revendications précédentes, comprenant un moyen permettant audit équipement routeur d'accès de transmettre lesdites informations de services en même temps que des informations d'adressage IP d'une interface disponible (202) dudit équipement routeur d'accès (2) avant que ledit équipement d'utilisateur ne soit connecté à l'interface (202) dudit équipement routeur (2).

15. Equipement d'utilisateur destiné à être connecté à une interface sélectionnée d'un équipement routeur d'accès (2) d'un fournisseur de services Internet au moyen d'un procédé tel que défini dans l'une quelconque des revendications précédentes, où ledit équipement d'utilisateur (1) répond à des informations relatives auxdits paramètres de services dudit fournisseur de services Internet transmises par ledit équipement routeur d'accès en même temps que des informations d'adresse IP d'une Interface disponible (202) dudit équipement routeur d'accès (2) avant que ledit équipement d'utilisateur ne soit connecté à l'interface (202) dudit équipement routeur (2).
